# FASCICULE DE BREVET EUROPEEN

(11) **EP 0 808 574 B1**
(45) Date de publication et mention de la délivrance du brevet: **04.09.2002**
(21) Numéro de dépôt: 97420076.8
(22) Date de dépôt: 23.05.1997
(51) Int. Cl.: A22C 13/00

(54) **Procédé de fabrication d'un produit de salaison ou saucisse et produit obtenu**
Verfahren zur Herstellung eines eingesaltzten Produkt und hergestelltes Produkt
Method for making a salted product or sausage and obtained product

(30) Priorité: 24.05.1996 FR 9606767
(43) Date de publication de la demande: 26.11.1997
(73) Titulaire: Werblicka, Didier, 25300 Pontarlier (FR); Werblicka, Simon, 25300 Pontarlier (FR)
(72) Inventeur: Werblicka, Didier, 25300 Pontarlier (FR); Werblicka, Simon, 25300 Pontarlier (FR)
(74) Mandataire: Thibault, Jean-Marc

(56) Documents cités:
- US-A- 3 615 692
- ITALO GHINELLI: "Laboratori di carne", 1985, PICCIN NUOVA LIBRARIA, PADOVA
- http:www.ouverture.it/consumo/articolo3.htm

## Description

La présente invention concerne le domaine de la charcuterie au sens général, et elle vise plus précisément les produits de salaison ou saucisses.

De tout temps, il a été recherché différentes méthodes ou procédés afin d'utiliser toute les parties d'un porc. Dans le domaine de la fabrication des saucisses, il a été ainsi envisagé d'utiliser les boyaux du porc en sachant que chaque type de boyaux est spécifique à une fabrication particulière de saucisses ou de saucissons.

Le développement de l'abattage industriel des porcs et l'achat de plus en plus développé des porcs en carcasse conduisent à une désaffection pour l'utilisation des boyaux naturels. Il est ainsi de plus en plus utilisé pour la fabrication de saucisses ou de saucissons, des boyaux en fibres naturelles, fibres synthétiques, voire même en plastique. Outre leur coût d'achat, il s'avère que de tels boyaux ne présentent pas les qualités gustatives des boyaux naturels.

Compte-tenu de ce problème, le déposant a eu le mérite de rechercher un nouveau moyen d'emballage de saucisses ou de produits de salaison au sens général utilisant une partie d'un porc non exploitée jusqu'à maintenant et qui confère aux produits finis des qualités gustatives améliorées.

L'objet de l'invention vise donc à atteindre cet objectif en proposant un procédé permettant de fabriquer un produit de salaison ou saucisse à partir de la couenne du porc, du type consistant :
- à couper la jambe dans un membre antérieur d'un porc,
- à apprêter la peau de la jambe en vue d'obtenir une couenne,
- à détacher à partir de la coupe, la couenne de la chair et des os, en laissant les onglons attachés à la couenne, de manière à obtenir une couenne en forme de poche étanche,
- à remplir l'intérieur de la poche à l'aide d'une farce,
- et à refermer la poche au niveau de la coupe, en vue d'obtenir un produit destiné à subir au moins une opération de cuisson pour permettre sa consommation.

Selon l'invention, le procédé consiste :
- à couper la jambe composée d'un pied prolongé par son jambonneau, à une distance minimum de 30 cm par rapport à l'extrémité du pied,
- à détacher la couenne de la chair en la tirant vers l'extrémité du pied et en l'enroulant sur elle-même au fur et à mesure de l'opération de décharnement et en laissant la chair et les os réunis pour former un seul morceau.

L'objet de l'invention vise aussi à offrir un nouveau produit de salaison ou saucisse, obtenu par le procédé de fabrication selon l'invention.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue de dessus d'une épaule d'un porc.

Les **fig. 2** à **6** sont des vues en coupe longitudinale d'une jambe de porc montrant différentes phases du procédé de fabrication conforme à l'invention.

La **fig. 7** est une vue schématique d'un produit obtenu par le procédé selon l'invention.

Le procédé selon l'invention consiste à disposer d'un membre antérieur **1** d'un porc, afin de pouvoir couper dans ce dernier, la jambe **2** composée du pied **3** prolongé par son jambonneau **4.** Il doit être considéré que la coupe **5** est effectuée dans l'épaule à une distance **d** minimum de 30 cm par rapport à l'extrémité du pied **3** définie par les onglons postérieurs **3**_{**1**}. A titre d'exemple, la coupe **5,** qui est réalisée par tous moyens appropriés, est effectuée à une distance de l'ordre de 30 à 40 cm à compter de l'extrémité du pied.

Le procédé selon l'invention consiste à éliminer par tous moyens appropriés, les soies de porc portées par la peau **6** de la jambe. Par exemple, la peau peut être brûlée et rasée de manière à obtenir une couenne. Il est à noter que l'opération de nettoyage de la peau peut être réalisée avant celle de découpe de la jambe **2.**

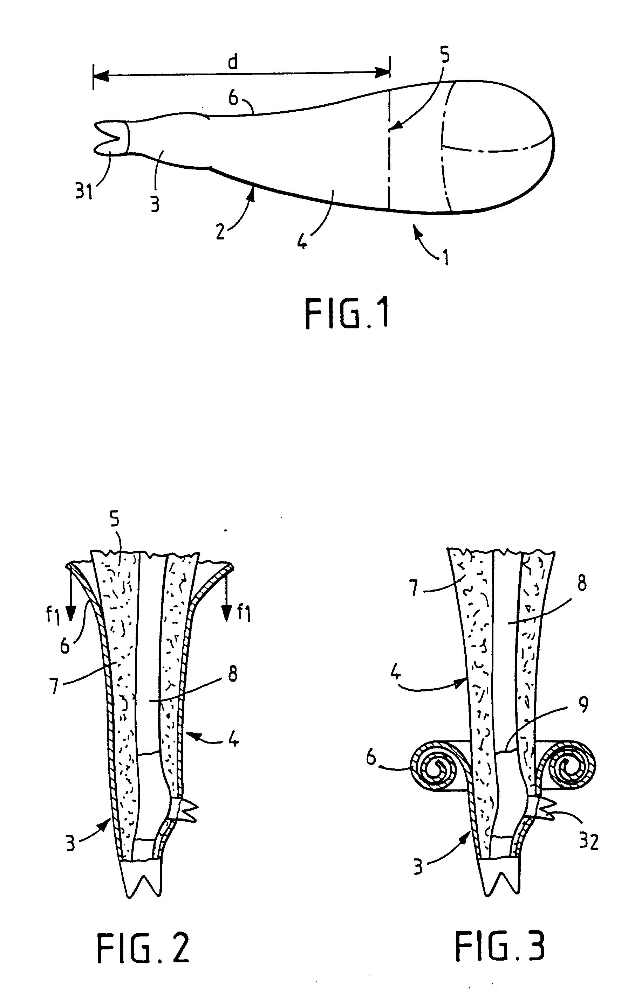

Le procédé selon l'invention consiste, ensuite, à détacher, à partir de la coupe **5,** la couenne **6** de la chair **7** et des os **8.** Cette opération est réalisée en tirant, comme cela apparaît plus précisément à la **fig. 2,** la couenne **6** vers l'extrémité du pied, c'est-à-dire sensiblement selon le sens des flèches **f**_{**1**}. La traction sur la couenne **6** est réalisée, de préférence, en des endroits successifs opposés, de manière à assurer son détachement progressif de la chair **7.** Bien entendu, par chair, il doit être compris aussi bien la viande que le gras du porc. De plus, il est à noter que cette opération manuelle peut être assortie, si le besoin s'en fait sentir, de l'utilisation d'un couteau pour faciliter cette opération de découennage en certains endroits. Lors de l'utilisation du couteau, il doit être veillé à ne pas percer la couenne **6.**

Pour faciliter cette opération, il peut être, de préférence, prévu d'enrouler sur elle-même la couenne au fur et à mesure de l'opération de décharnement, tel que cela ressort plus précisément de la **fig. 3.** Cette opération de découennage se poursuit jusqu'au niveau des deux onglons antérieurs **3**_{**2**} du pied **3.** Selon une caractéristique avantageuse du procédé, il convient de ne pas couper la jointure **9** entre le pied **3** et le jambonneau **4,** de manière que ces deux parties restent attachées pour former un unique morceau.

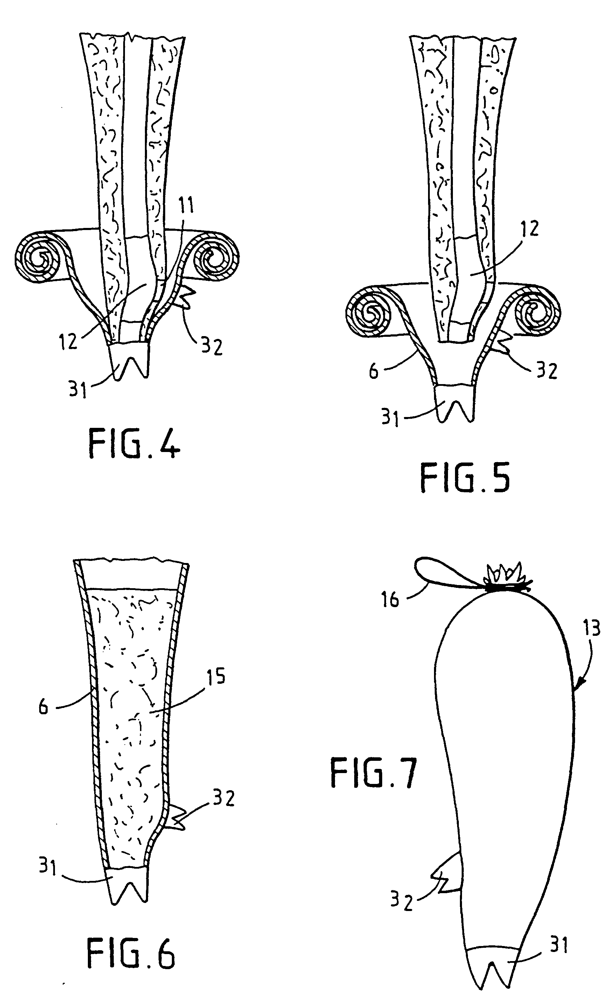

Tel que cela ressort plus précisément de la **fig. 4,** le procédé consiste, ensuite, à couper la jointure **11** entre l'os **12** du pied et les onglons antérieurs **3**_{**2**}. Tel que cela ressort clairement de la **fig. 4,** les onglons antérieurs **3**_{**2**} restent ainsi attachés à la couenne **6.** Durant cette opération, il doit être veillé à ne pas percer la couenne **6.**

L'opération de découennage est ensuite poursuivie jusqu'au niveau des onglons postérieurs **3**_{**1**}. Tel que cela ressort de la **fig. 5,** il est ensuite procédé à la séparation des onglons postérieurs **3**_{**1**} par rapport à l'os **12** du pied. Après avoir été déjointés de l'os central, les onglons postérieurs **3**_{**1**} restent attachés à la couenne **6.** Lors de cette opération, il doit être également veillé à ne pas percer la couenne **6.**

Tel que cela ressort de la **fig. 6,** le procédé selon l'invention a donc permis d'obtenir une couenne **6** qui présente une forme de poche ou de sachet pourvu des deux onglons postérieurs **3**_{**1**} et de ses deux onglons antérieurs **3**_{**2**}**.**

Conformément à l'invention, cette poche **6** de nature étanche ou hermétique est destinée à être utilisée comme emballage d'un produit **13** de salaison ou saucisse rempli préalablement par une farce **15** au sens général. Préalablement à son remplissage, la couenne **6** subit, de préférence, une phase de traitement pouvant être de toute nature appropriée. Par exemple, la couenne **6** peut être présalée et placée dans un bain anti-bactériologique pendant, par exemple, une durée de 24 heures. La couenne **6** peut ensuite être rincée et séchée avant d'être garnie par une farce **15** de toute nature appropriée. Par farce, il doit être compris toute préparation culinaire susceptible d'être consommée après cuisson, à base de porc ou non. Par exemple, il peut être prévu de garnir cette poche à l'aide de la chair à saucisse, par exemple, de morteau ou par une farce de porc fine, du type cervelas, par des lèches de porc marinées ou non et mélangées à de la farce, ou par la viande de porc enlevée lors de l'opération de découennage et retravaillée comme un jambon. Cette garniture **15** peut comporter où non divers condiments, aromates ou légumes. L'opération de garnissage peut être facilitée à l'aide d'un poussoir pour permettre le remplissage complet et régulier de la poche **6.**

Tel que cela ressort de la **fig. 7,** le procédé selon l'invention consiste, ensuite, à fermer la poche **6** au niveau de la coupe **5** à l'aide de tous moyens de fermeture **16.** Par exemple, la fermeture de la poche peut être réalisée à l'aide d'une ficelle ou d'une cheville en bois sur laquelle sont refermés, à l'aide d'un fil, les bords de la couenne. Le produit obtenu **13** présente ainsi, en tant qu'emballage, une couenne étanche formée par la partie d'un pied de porc, à l'intérieur de laquelle est enfermée une farce. Ce produit est destiné à subir une opération de cuisson pour permettre sa consommation. Il est à noter que sa cuisson peut être partielle pour permettre une cuisson définitive par le consommateur final. Le produit peut être cuit dans un bouillon aromatisé ou non, en fonction du goût du consommateur. Il est à noter que l'opération de cuisson peut être précédée ou non d'une opération de fumage par tout méthode connue appropriée.

## Revendications

1. Procédé de fabrication d'un produit (**13**) de salaison ou saucisse, du type consistant :
- à couper la jambe (**2**) dans un membre antérieur (**1**) d'un porc,
- à apprêter la peau (**6**) de la jambe en vue d'obtenir une couenne,
- à détacher à partir de la coupe, la couenne (**6**) de la chair et des os, en laissant les onglons (**3**_{**1**}**, 3**_{**2**}) attachés à la couenne, de manière à obtenir une couenne en forme de poche étanche,
- à remplir l'intérieur de la poche (**6**) à l'aide d'une farce,
- et à refermer la poche (**6**) au niveau de la coupe (**5**), en vue d'obtenir un produit destiné à subir au moins une opération de cuisson pour permettre sa consommation,
**caractérisé en ce qu'**il consiste :
• à couper la jambe (**2**) composée d'un pied (**3**) prolongé par son jambonneau (**4**), à une distance minimum de 30 cm par rapport à l'extrémité du pied,
• à détacher la couenne (**6**) de la chair en la tirant vers l'extrémité du pied et en l'enroulant sur elle-même au fur et à mesure de l'opération de décharnement et en laissant la chair et les os réunis pour former un seul morceau.

2. Procédé selon la revendication 1, **caractérisé en ce qu'**il consiste à faire précéder l'opération de remplissage par une phase de traitement de la couenne (**6**).

3. Procédé selon la revendication 1, **caractérisé en ce qu'**il consiste à effectuer une opération de fumage du produit (**13**) avant sa cuisson.

## Claims

1. Method for producing a curing or sausage product (13) of the type consisting of:
• cutting the leg (2) in a fore member (1) of a pig,
• preparing the skin (6) of the leg so as to obtain a pork rind,
• detaching from the cut the pork rind (6) from the meat and bones by leaving the trotters (3₁, 3₂ attached to the pork rind so as to obtain a rind in the shape of a sealed pocket,
• filling the inside of the pocket (6) with stuffing,
• and closing the pocket (6) at the level of the cut (5) so as to obtain a product intended to undergo at least one cooking operation to enable it to be consumed,
**characterised in that** it consists of:
• cutting the leg (2) composed of a trotter (3) extended by its foreleg ham (4) at a minimum distance of 30 cm with respect to the extremity of the trotter,
• detaching the pork rind (6) from the meat by pulling it towards the extremity of the trotter and by winding it gradually during the meat removal operation and by leaving the meat and bones combined to form a single piece.

2. Method according to claim 1, **characterised in that** it consists of preceding the filling operation by a pork rind processing phase (6).

3. Method according to claim 1, **characterised in that** it consists of carrying out a stuffing operation of the product (13) before the latter is cooked.

## Patentansprüche

1. Verfahren zur Herstellung eines Pökel- oder Wursterzeugnisses (13), mit den Schritten:
- Abschneiden des Beins (2) von einem Vorderschinken (1) eines Schweins,
- Zubereiten der Haut (6) des Beins, um eine Schwarte zu erhalten,
- von dem Schnitt ausgehendes Ablösen der Schwarte (6) vom Fleisch und von den Knochen, wobei die Klauen (3₁, 3₂) an der Schwarte befestigt bleiben, so dass eine Schwarte in Form eines dichten Sackes erhalten wird,
- Füllen des Inneren des Sackes (6) mit einer Füllung,
- und Wiederverschließen des Sackes (6) in Höhe des Schnittes (5), um ein Erzeugnis zu erhalten, das dazu bestimmt ist, mindestens einem Kochvorgang unterworfen zu werden, damit es konsumiert werden kann,
**dadurch gekennzeichnet, dass** es daraus besteht,
- das Bein (2), das sich aus einem um seinen Schenkel (4) verlängerten Fuß (3) zusammensetzt, in einem Mindestabstand von 30 cm vom Ende des Fußes abzuschneiden,
- die Schwarte (6) vom Fleisch zu lösen, indem man sie in Richtung auf das Ende des Fußes abzieht und sie um sich selbst herum in dem Maß des fortschreitenden Ablösens vom Fleisch einrollt und das Fleisch sowie die Knochen miteinander verbunden lässt, so dass sie ein einziges Stück bilden.

2. Verfahren nach Anspruch 1, **dadurch gekennzeichnet, dass** es darin besteht, dem Vorgang des Füllens eine Phase der Behandlung der Schwarte (6) vorangehen zu lassen.

3. Verfahren nach Anspruch 1, **dadurch gekennzeichnet, dass** es darin besteht, einen Räuchervorgang des Erzeugnisses (13) vor dessen Kochen durchzuführen.
